# EUROPEAN PATENT SPECIFICATION

(11) **EP 3 450 226 B1**
(45) Date of publication and mention of the grant of the patent: **25.10.2023**
(21) Application number: 18188829.8
(22) Date of filing: 14.08.2018
(51) Int. Cl.: B60H 1/00, F24F 13/14, B60H 1/34

(54) **AIR VENT FOR A VEHICLE**
LUFTAUSSTRÖMER FÜR EIN FAHRZEUG
DIFFUSEUR D'AIR POUR UN VÉHICULE

(30) Priority: 31.08.2017 DE 102017120003
(43) Date of publication of application: 06.03.2019
(73) Proprietor: Illinois Tool Works Inc., Glenview, IL 60025 (US)
(72) Inventor: Krämer, Günther, 67677 Enkenbach-Alsenborn (DE); Baumann, Ulrike, 67722 Winnweiler (DE); LeFever, Andrew, 57550 Remering (FR)
(74) Representative: Meissner Bolte Partnerschaft mbB

(56) References cited:
- DE-A1- 4 343 367
- DE-A1- 19 717 335
- JP-A- 2012 254 662
- JP-U- H0 393 349

## Description

The invention relates to an air vent for a vehicle, comprising a housing with an air duct bounded by the housing, and at least one shut-off flap which is adjustable between a closed position and an open position within the air duct and has a flap body and a sealing edge which at least partially surrounds the flap body for butting against a sealing surface of the housing in the closed position.

The document JP H0393349 U relates to an air vent for a vehicle comprising a housing with an air duct bounded by the housing, at least one shut-off flap which is adjustable between a closed position and an open position within the air duct, and which has a flap body and a sealing edge which at least partially surrounds the flap body for butting against a sealing surface of the housing in the closed position, wherein the sealing edge is composed of the same material as the flap body and has a lower rigidity than the flap body.

The document DE 43 43 367 A1 relates to an air flap for shutting off an air channel, in particular of an air duct of a heating and/or air-conditioning system of a motor vehicle.

The document DE 197 17 335 A1 relates to a pivoting flap for controlling an air flow, in particular in a heating/ventilation or air conditioning device for the passenger compartment of a vehicle. The pivoting flap comprises a flexible lip which is capable of coming into contact with a fixed wall by means of an edge when approaching an end-of-travel position.

The document JP 2012 254 662 A relates to a damper device of an air vent.

Air vents of this type for vehicles serve for ventilating a vehicle interior. For this purpose, the air vent is arranged, for example, in the dashboard region of a vehicle and directs an air flow flowing through the air duct in the direction of the vehicle interior. To throttle or to completely interrupt the air flow, a shut-off flap is provided which is arranged within the air duct and, in the open position, opens up the air duct for the air flow. If the shut-off flap is rotated from the open position into the closed position, the shut-off flap closes the cross section of the air duct and the sealing edge surrounding the flap body comes to butt in a sealing manner against the sealing surface of the housing.

Known shut-off flaps generally consist of two components, a hard plastics component for the flap body and a softer plastics component for the sealing edge. The sealing edge composed of softer plastic enables flexible butting against the sealing surface of the housing, while the flap body of the shut-off flap imparts stability. Two-component shut-off flaps of this type are known, for example, from DE 20 2006 002 771 U1 and DE 20 2012 101 945 U1. However, the production of two-component flaps of this type is expensive and complicated. It is also conceivable to surround a flap body made from plastic with a sealing edge made from foam or felt. However, foam or felt seals require complex tool technology and a complicated installation of the seal. In addition, there is a risk of damage in the case of felt or foam seals, in particular during the installation, and they generate
considerable waste during production, in particular when punching out the seal. Finally, it is also conceivable to configure the shut-off flap in such a manner that the flap body made from hard plastic comes directly into abutment with the sealing surface of the housing. In this case, however, a particularly high degree of manufacturing accuracy is necessary so that no gap remains between shut-off flap and housing in the closed position, but this is not very successful in practice. Gaps lead to leakages and in particular small gaps lead to unpleasant whistling noises. In addition, flaps of this type have the disadvantage of a significant closing noise. Taking the prior art which has been explained as the starting point, the invention is based on the object of providing an air vent of the type mentioned at the beginning which permits reliable sealing of the air duct in a simple manner.

The invention achieves the object by the subject matter of independent claim 1. Advantageous refinements of the invention are found in the dependent claims.

The air vent for a vehicle, according to the invention comprises a housing with an air duct bounded by the housing, at least one shut-off flap which is adjustable between a closed position and an open position within the air duct and has a flap body and a sealing edge which at least partially surrounds the flap body for butting against a sealing surface of the housing in the closed position, wherein the sealing edge of the shut-off flap is composed of the same material as the flap body and has a lower rigidity than the flap body.

The housing forms an air duct through which an air flow can flow from an air inlet end to an air outlet end along a main flow direction. The main flow direction can extend in particular along a longitudinal axis of the air duct. For deflecting the air flow from the main flow direction, rotatably mounted air-directing elements, such as air-directing slats, can be provided within the air duct. The at least one shut-off flap mounted within the air duct is mounted adjustably in the air duct, in particular on the housing of the air duct. The at least one shut-off flap can be adjusted into an open position in which the air duct is opened up for the air flow to flow through. In particular, the at least one shut-off flap can be adjusted into a fully open position in which the shut-off flap is oriented substantially parallel to the air flow and therefore influences the air flow as little as possible. In the closed position, the at least one shut-off flap blocks the air duct, i.e. prevents the air flow from flowing through the air duct, in particular from emerging from the air outlet opening. In the closed position, the sealing edge of the at least one shut-off flap lies in a sealing manner against a sealing surface of the housing. Said sealing surface can be formed by an inner wall of the housing. In the closed position, the at least one shut-off flap can be substantially perpendicular to the main flow direction. The at least one shut-off flap can also take up a multiplicity of intermediate positions located between the fully open position and the closed position, in order to reduce the free cross section of the air duct and to throttle the air flow. Precisely one shut-off flap can be provided, the sealing edge of which comes to butt in a sealing manner against the sealing surface of the housing in the closed position. The sealing edge can at least partially, in particular completely, surround the flap body on the circumferential side. In the closed position, the shut-off flap can block the air duct and, in the open position, can open up the air duct. The shut-off flap can be adapted to the cross section of the air duct. In particular, the shut-off flap can have a substantially rectangular form. The air duct can then in particular have a substantially rectangular cross section. The at least one shut-off flap can also be polygonal, for example hexagonal or octagonal.

The at least one shut-off flap can also have a triangular form or can be diamond-shaped. Alternatively, a plurality of shut-off flaps can be provided, the flap bodies of which are at least partially surrounded on the circumferential side by a respective sealing edge. If a plurality of shut-off flaps are intended to be provided, the latter in the closed position can together form a polygon, for example a hexagon or an octagon, wherein the individual shut-off flaps form portions of said polygon. In the closed position, the sealing edges of the shut-off flaps can form a substantially completely encircling seal for butting against the sealing surface of the housing. The shut-off flaps therefore jointly block the air duct in the closed position. It goes without saying that, in the case of a plurality of shut-off flaps, the shut-off flaps can also be sealed in relation to one another. The shut-off flaps can thus have sealing edges or sealing surfaces for providing a seal in relation to adjacent shut-off flaps, wherein, in the closed position, the sealing edge of a first shut-off flap can interact in a sealing manner with the sealing surface of an adjacent second shut-off flap. For example, butterfly flaps can be provided as shut-off flaps. In particular, such butterfly flaps can be polygonal, for example hexagonal or octagonal, as described above. They can also be crescent-shaped. What is referred to as a "rear vane shut off' can also be provided, wherein the air-directing elements, for example slats, located at the rear in the air duct - i.e. furthest upstream - act as shut-off flaps. For this purpose, they can lie on one another in the manner of roof tiles in the closed position. Slats of this type can also have, for example, a polygonal form, in particular a rectangular or triangular form, or a diamond shape. Alternatively, radial flaps can be provided as shut-off flaps, wherein these flaps can in particular be designed in the shape of a segment of a circle or in triangular form.

The sealing edge at least partially, in particular completely, surrounds the flap body along its circumference. The sealing edge encircling the flap body can have interruptions formed by bearing elements, wherein the bearing elements serve for mounting the at least one shut-off flap on the air duct, in particular on the housing of the air duct. The sealing surface of the housing can likewise substantially completely encircle an inner wall of the housing, wherein interruptions for bearing elements for the mounting of the at least one shut-off flap can also be provided here. In the closed position, the sealing edge of the at least one shut-off flap lies against the sealing surface of the housing and therefore seals off the air duct from passage of the air flow.

According to the invention, both the sealing edge and the flap body of the at least one shut-off flap are composed of the same material, for example a plastic. For example, the flap body and the sealing edge can be manufactured from the same plastics material in a joint plastics injection molding process. Production of the flap body and of the sealing edge surrounding the flap body from the same material is particularly straightforward. In addition, the sealing edge has, according to the invention, a lower rigidity than the flap body. Rigidity should be understood here as meaning the resistance against elastic deformation by a force or a torque. Although the sealing edge is composed of the same material as the flap body, it consequently has a lower resistance against elastic deformation than the flap body. According to the invention, the lower rigidity of the sealing edge is therefore not caused solely by the choice of material but, for example, by the geometry of the sealing edge. By choosing geometries of different stiffness for flap body and sealing edge it is ensured despite the use of the same material that the at least one shut-off flap has high stability because of the relatively stiff flap body and nevertheless permits reliable sealing of the air duct because of the relatively elastic sealing edge. In the closed position, the sealing edge substantially completely seals the air duct here, and therefore the air flow is substantially completely interrupted. It is not necessary here for each portion of the sealing edge to have a lower rigidity than the flap body, but rather the sealing edge surrounding the flap body on the circumferential side has a lower rigidity in its entirety than the flap body. The sealing edge can thus have, for example, portions with a rigidity comparable to the rigidity of the flap body or even a greater rigidity if the sealing edge on average has a lower rigidity. A lower rigidity of the sealing edge can be achieved, for example, by smaller wall thicknesses of the sealing edge or by suitable geometry of the sealing edge, as will also be explained below. In an advantageous manner, the at least one shut-off flap according to the invention can meet the same requirements in respect of tightness, closing noises and endurance properties as a two-component flap, or can even exceed said requirements. On account of the manufacturing from merely one material, the production is, however, substantially simplified.

According to one refinement, the sealing edge has a smaller wall thickness than the flap body. On account of the small wall thickness, i.e. a smaller thickness, the sealing edge is less rigid than the flap body. The sealing edge can extend here in particular rectilinearly from the flap body, i.e. can lie substantially in the plane of the flap body. The sealing edge can have a smaller wall thickness, in particular over its entire extent, than the flap body. The sealing edge can also have a variable wall thickness, wherein the wall thickness is at least partially smaller than a wall thickness of the flap body. For example, the wall thickness of the sealing edge can decrease with increasing distance from the flap body. The wall thickness of the sealing edge can also initially decrease with increasing distance from the flap body and can then increase again. The wall thickness of the sealing edge can likewise initially increase with increasing distance from the flap body and can then decrease again.

According to the invention, the sealing edge has a curved cross-sectional shape of an expansion bellows. The sealing edge runs in a wavy fashion in a direction away from the flap body. The cross-sectional shape of the sealing edge here forms a plurality of consecutive waves. In particular by means of a plurality of consecutive waves, i.e. the shape of an expansion bellows, the rigidity of the sealing edge can be reduced in a particularly targeted manner in relation to the rigidity of the flap body. A lower rigidity of the sealing edge is therefore achieved here especially via the geometry of the sealing edge. The sealing edge here can basically have the same wall thickness as the flap body. However, in this case, the sealing edge preferably also has a smaller wall thickness than the flap body.

According to a further refinement, the flap body has stiffening surface structures, in particular stiffening ribs. The stiffening surface structures serve for increasing the rigidity of the flap body and for maintaining the shape in a possible injection molding process. The flap body can therefore have a higher rigidity than the sealing edge. Alternatively or additionally, the flap body can also have an arched shape, for example a shell shape, or thickenings for reinforcement purposes.

According to one refinement, the at least one shut-off flap is produced in an injection-molding process, in particular in an internal pressure injection-molding process, or in a foaming process. In particular, the flap body can be produced by an internal pressure injection-molding process while the sealing edge is produced by conventional injection molding. By means of the internal pressure injection-molding process, the flap body can in particular be produced with a comparable rigidity as in the case of a conventional injection-molding process, with considerable savings on material. A foaming process can also permit a saving on material in particular during production of the flap body with a comparable rigidity as in an injection-molding process.

According to a further refinement, the air vent furthermore comprises an operating mechanism, which is coupled to the at least one shut-off flap, for pivoting the at least one shut-off flap. The operating mechanism can be actuated, for example, electronically or mechanically by an operator in a vehicle interior. The operating mechanism can be coupled here to the shut-off flap, in particular on an axis of rotation of the at least one shut-off flap, for example via bearing elements provided on the shut-off flap. For this purpose, the operating mechanism can reach through the housing of the air vent from the outside. The bearing elements of the shut-off flap can also reach for this purpose through the housing from the inside. Via the operating mechanism, the at least one shut-off flap can be rotated about its axis of rotation between the closed position and the open position. The operating mechanism can act here in particular on one side or on both sides from two opposite sides in order to couple to the at least one shut-off flap on one side or both sides. During pivoting of the at least one shut-off flap by means of the operating mechanism, a torque acts on the shut-off flap. In particular in the case of coupling of the at least one shut-off flap to the operating mechanism on one side said torque frequently results in twisting, in particular torsion, of the shut-off flap. In particular during the adjustment of the at least one shut-off flap into the closed position, distortions or torsion of the shut-off flap occur on account of reaction forces which occur because of the contact of the sealing edge with the sealing surface of the housing. Said reaction forces act as restoring forces in the direction of the open position of the shut-off flap and generally increase with decreasing distance from the engagement point of the torque, i.e. from the coupling point between shut-off flap and operating mechanism. This can lead to a non-uniform closing of the air duct and therefore to undesirable closing noises, in particular to whistling, and also to increased leakage. In addition, an operator has to apply a high force for the manual adjustment of the at least one shut-off flap into the closed position.

According to one refinement, the at least one shut-off flap is therefore twisted about its axis of rotation, or the sealing surface of the housing is twisted about the axis of rotation of the at least one shut-off flap. It can therefore be provided to twist the at least one shut-off flap about its axis of rotation in order to overcome the abovementioned problem. The housing, and therefore the air duct in the region of the sealing surface, can also be twisted about the axis of rotation of the shut-off flap. To compensate for the torsion generated by the torque of the operating mechanism, the preset torsion of the shut-off flap or of the sealing surface is intended to take place in an opposite direction. The shut-off flap or the housing can therefore be produced such that they are already twisted counter to the torsion brought about by the torque of the operating mechanism. An otherwise occurring loss of surface pressure can therefore be compensated for and an equilibrium found between the torsion of the shut-off flap and the contact pressure of the sealing edge. The closed position is in particular taken up gradually here, wherein the first contact of the sealing edge of the shut-off flap with the sealing surface of the housing occurs at a point remote from the engagement point of the operating mechanism on the at least one shut-off flap. During further movement of the shut-off flap into the closed position, the sealing edge is gradually placed against the sealing surface up to the engagement point of the operating mechanism on the at least one shut-off flap. This avoids undesirable closing noises. By means of the equilibrium between torsion of the shut-off flap or of the housing and the resetting forces of the sealing edge, a uniform abutment of the sealing edge against the sealing surface occurs, which ensures optimum sealing. If a plurality of shut-off valves are intended to be provided, all said shut-off flaps can in particular be twisted.

According to one refinement, the distance between the flap body and the sealing surface in the closed position is reduced with increasing distance from the operating mechanism. For example, the cross section of the air duct in the region of the sealing surface of the housing can be reduced with increasing distance from the operating mechanism, in particular with increasing distance from the engagement point of the operating mechanism on the at least one shut-off flap. Alternatively or additionally to the above-described twisted configuration of the sealing edge or of the sealing surface, it can therefore be provided that the cross section of the air duct is constricted in the region of the sealing surface. A constriction takes place here starting from the operating mechanism, in particular starting from the engagement point of the operating mechanism on the at least one shut-off flap. The disadvantages occurring due to the torsion forces can thereby also be avoided. In particular in the case of an operating mechanism coupled on one side to the at least one shut-off flap, it can be provided that the sealing surface is constricted, i.e. runs obliquely into the air duct. Alternatively or additionally, it can also be provided that the sealing edge has an increasing width with increasing distance from the operating mechanism, in particular from the engagement point of the operating mechanism on the at least one shut-off flap. The distance between the flap body and the sealing surface can thereby also be reduced and, despite the torsion of the shut-off flap that is caused by the torque, uniform closing over the entire extent of the sealing edge can be achieved.

According to a further refinement, the operating mechanism can be a toggle lever mechanism, comprising a flap lever arranged on the outer side of the housing, wherein the flap lever and the at least one shut-off flap are connected to each other in a manner reaching through the housing, and furthermore comprising a connecting rod which is in engagement with the flap lever, and an operating element which is in engagement with the connecting rod. The flap lever reaches through the housing of the air duct from an outer side inward and is coupled to the at least one shut-off flap, for example via corresponding bearing elements. A flap-lever pin projecting into the air duct can be connected, for example, to a bearing receptacle of the shut-off flap. However, the flap lever can also be arranged exclusively on the outer side of the housing while a bearing element of the shut-off flap reaches through the housing from the inside outward and is connected to the flap lever. While the flap lever is connected at a first end to the shut-off flap, it is in engagement at a second end opposite the first end with the connecting rod. The operating element can be in particular an operating wheel which is operable from the vehicle interior. The operating element can be mounted rotatably on the housing via a bearing. By means of rotation of the operating element about its bearing axis, the connecting rod and, via the latter, the flap lever are pivoted with the effect of a toggle lever mechanism. Toggle lever systems of this type are particularly suitable for actuating the shut-off flap. In the case of toggle lever systems of this type, in the vicinity of the toggle point, even at low operating forces on the operating element, high forces occur on the shut-off flap, which are suitable for bringing about the above-described torsion of the shut-off flap. Furthermore, in the overpressed position of the toggle lever, the flap is securely held in the closed position. If a plurality of shut-off flaps are intended to be provided, the flap lever can be connected in particular to one of the shut-off flaps. The further shut-off flaps can be moved synchronously with the activated shut-off flap via a coupling element. Alternatively, however, a different operating mechanism can also be provided. If it is intended for butterfly flaps or radial flaps to be used as shut-off flaps, a bevel gearing, for example, can be provided as the operating mechanism.

According to a further refinement, the operating element latches to the housing in the closed position of the at least one shut-off flap. The operating element, in particular the operating wheel, can therefore be fixed in its end position corresponding to the closed position of the shut-off flap via latching elements or end stops. The closed position of the shut-off flap is therefore not force-determined but rather path-determined. By means of such a latching engagement, the shut-off flap can be held particularly securely in the closed position.

According to a further refinement, the sealing surface of the housing is roughened in relation to the sealing edge. Alternatively, the sealing edge can also be roughened in relation to the housing. An increased roughness reduces closing noises.

According to a further refinement, the sealing surface of the housing can be inclined at least in sections in relation to a longitudinal direction of the air duct. The longitudinal direction of the air duct can be in particular the main flow direction of the air flow flowing through the air duct. In particular in the case of a rectangular cross section of the air duct, it can be provided that only the portions of the sealing surface parallel to an axis of rotation of the at least one shut-off flap are inclined in relation to the longitudinal direction of the air duct while the portions of the sealing surface perpendicular to the axis of rotation are not inclined. The inclined portions of the sealing surface are preferably inclined here in the same direction, in particular parallel to each other. This can be achieved, for example, by the entire air duct in the region of the sealing surface being offset in a direction perpendicular to the axis of rotation and in particular also perpendicular to the longitudinal axis of the air duct. However, the sealing surface is preferably inclined in an encircling manner. In an advantageous manner, there are then no steep steps in the region of the sealing surface, which leads to a reduction in flow noises. Furthermore, the sealing conditions remain constant along the entire sealing surface. The inclined sealing surface forms a ramp. In the closed position, the sealing edge of the shut-off flap then butts against said inclined sealing surfaces. This has the advantage in particular that the sealing edge more reliably seals to the sealing surface. In particular, the air flow therefore pushes the shut-off flap at least in sections in the direction of the closed position.

According to a further refinement, the contact between the sealing edge and the sealing surface runs substantially linearly in the closed position. Linearly refers here to contact with only a small extent, i.e. a contact surface of small width. Such a narrow contact has the advantage that high surface pressure is achieved since the applied closing force acts only on a small surface. This results in particular in lower closing noises. A twisted constructional form of the shut-flap or of the housing or a constriction of the cross section of the air duct also has an advantageous effect here since, during the adjustment of the shut-off flap into the closed position, initially only a small contact occurs - substantially at only one point - and the linear contact is produced only when the closed position has been fully reached. Closing noises are thereby particularly readily reduced.

According to a further refinement, the at least one shut-off flap has, at each of two opposite ends, a bearing element interrupting the sealing edge for the rotatable mounting on the housing. As already explained above, the at least one shut-off flap can have two bearing elements arranged on its axis of rotation for mounting the shut-off flap on both sides on the housing. An operating element for rotating the at least one shut-off flap can be in engagement with one or both of said bearing elements, as likewise explained above. The bearing elements can be, for example, bearing pins mounted on the housing or on an operating mechanism, or else bearing receptacles which receive the bearing pins of the housing or of an operating mechanism. The first bearing element can also be designed as a bearing pin and the second bearing element as a bearing receptacle. The bearing elements are arranged here on the axis of rotation of the at least one shut-off flap and therefore interrupt the encircling sealing edge at least in sections. Such a construction is particularly compact. According to one refinement, it is provided that the sealing edge of the shut-off flap extends as far as the bearing elements, wherein the sealing edge portions lying against the bearing elements have a curved shape and/or have a smaller wall thickness than the remaining sealing edge. By this means, reliable sealing of the air duct is made possible despite the interruption to the sealing edge.

The invention is explained in more detail below with reference to figures, in which, schematically:
- figure 1: shows a perspective sectional view through an air vent according to the invention together with a fully illustrated shut-off flap in the closed position,
- figure 2: shows the air vent from figure 1 with the shut-off flap in the open position,
- figure 3: shows the illustration from figure 1 with a sectioned shut-off flap,

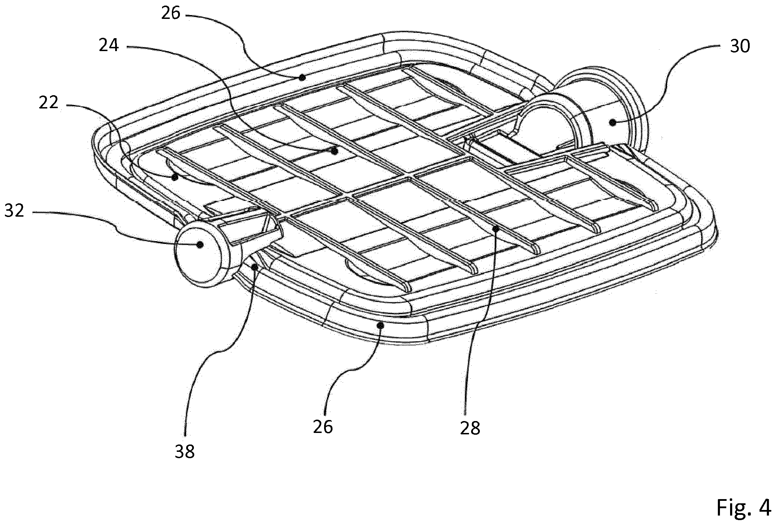

- figure 4: shows the shut-off flap from the previous figures in a perspective view,
- figure 5: shows a detailed view of figure 3,
- figure 6: shows a detailed view of the shut-off flap from figure 4, and
- figure 7: shows the air vent from another side together with the operating mechanism.

Unless stated otherwise, the same reference signs denote identical objects.

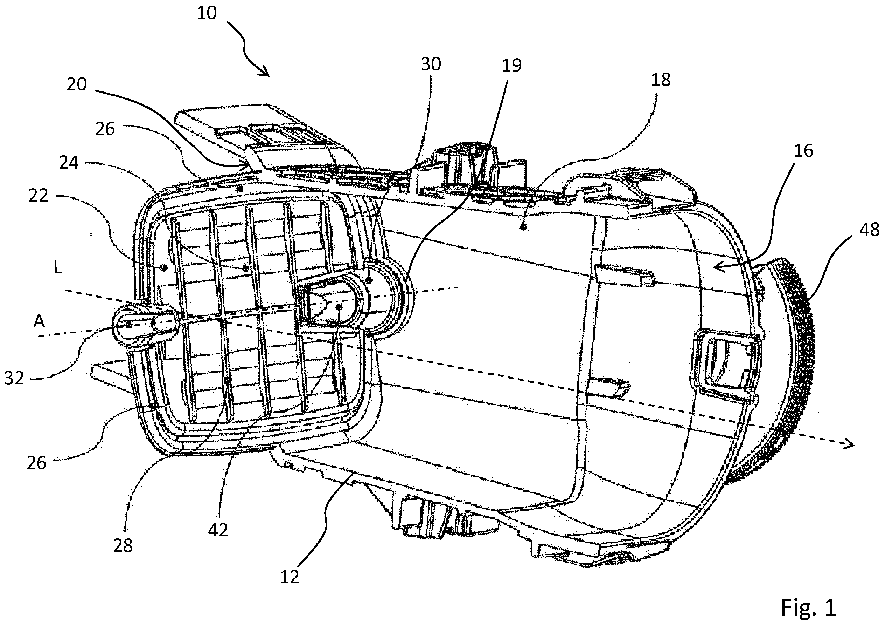

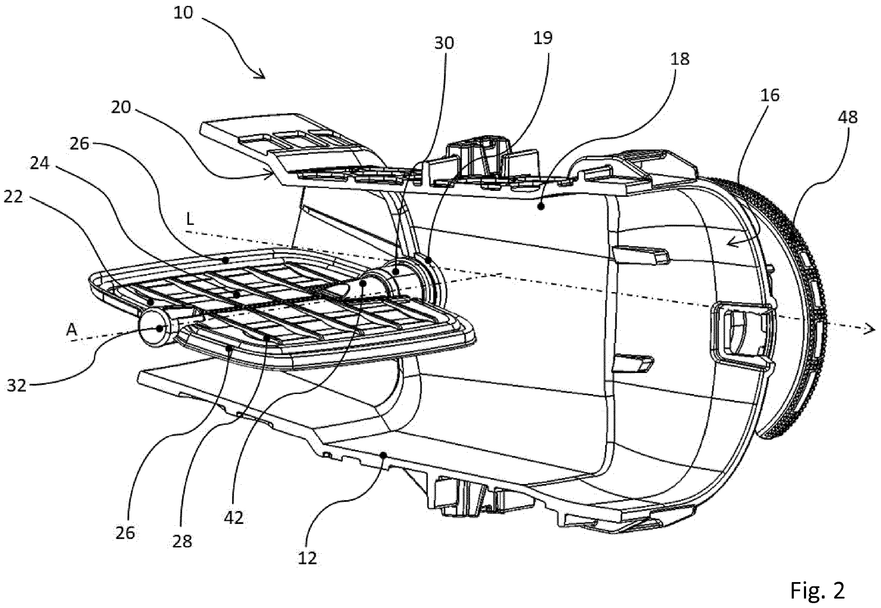

Figures 1 to 3 show a sectioned air vent 10 with a housing 12 which bounds an air duct 18 with an air inlet end 14 and an air outlet end 16. An air flow L flows along the line (illustrated by dashed lines) through the air duct 18 from the air inlet end 14 to the air outlet end 16. The dashed line refers here to the main flow direction of the air flow. A deflection of the air flow from said main flow direction can be achieved by air-guiding elements (not illustrated). Within the air duct 18, a shut-off flap 22 is mounted rotatably about an axis of rotation A. The shut-off flap 22 comprises a flap body 24 and a sealing edge 26 surrounding the flap body on the circumferential side. The shut-off flap 22 is formed integrally here, wherein the flap body 24 has a substantially rectangular form. The sealing edge 26 substantially completely surrounds the shut-off flap 22 on the circumferential side. The sealing edge 26 is interrupted on two opposite sides of the shut-off flap merely for the mounting of the shut-off flap 22 on the housing 12. In order to increase the rigidity of the flap body 24, stiffening ribs 28 run over the width of the flap body 24. The shut-off flap 22 has a bearing pin 32 which is accommodated in a bearing receptacle (not illustrated) of the housing 12. Furthermore, the shut-off flap 22 has a bearing receptacle 30 in which a pin of a flap lever 42 that reaches through the housing 12 engages.

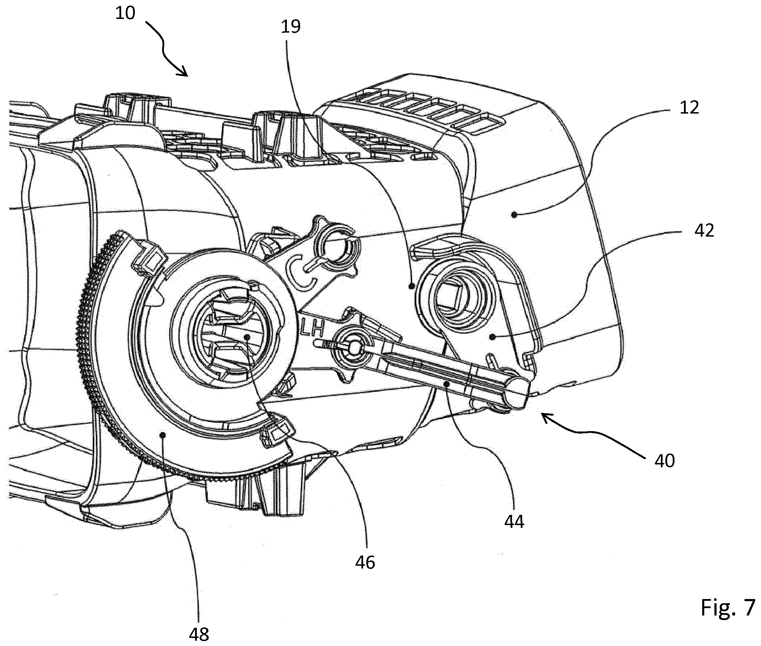

The shut-off flap 22 can be adjusted about its axis of rotation A in relation to the air flow L via the flap lever 42. For this purpose, an operating wheel 48 is provided which is mounted on the housing 12 via an operating wheel mounting 46 (see in particular figure 7). The operating wheel 48 via an extension LH grips a connecting rod 44 which, in turn, is connected to the flap lever 42. By rotation of the operating wheel 48 about the operating wheel mounting 46, the connecting rod 44, and therefore the flap lever 42 are moved - by means of a toggle lever mechanism. This operating mechanism 40 can be seen in particular in figure 7.

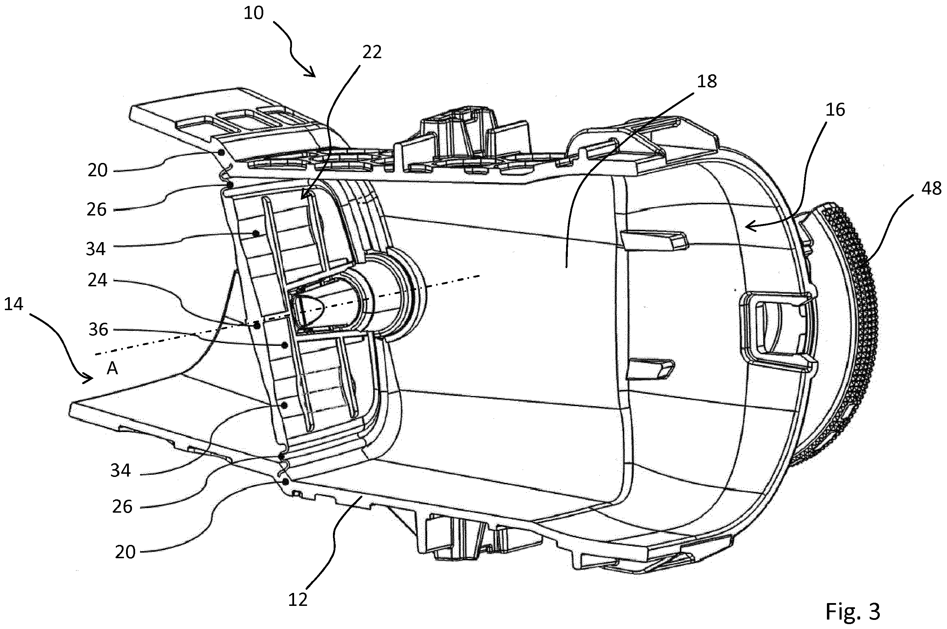

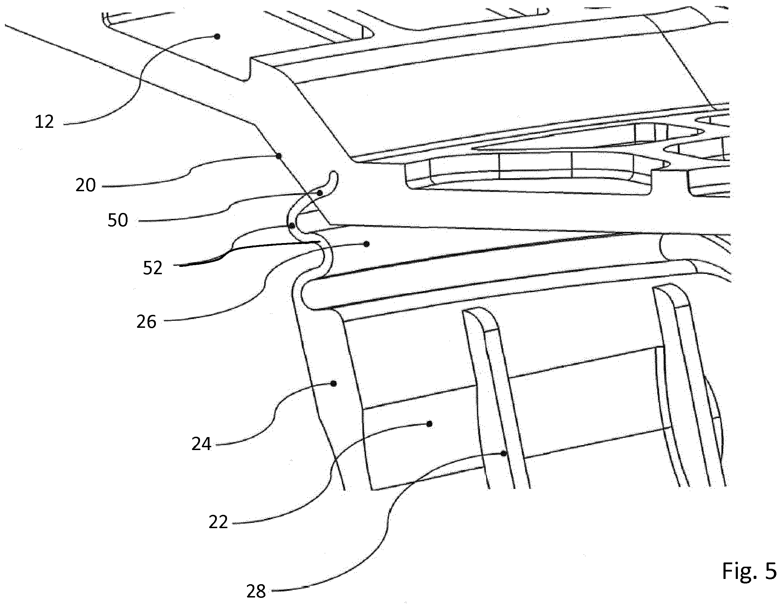

According to the invention, the sealing edge 26 of the shut-off flap 22 is composed of the same material as the flap body 24, but has a lower rigidity. In the present exemplary embodiment, the differences in the rigidity between flap body 24 and sealing edge 26 are realized by a different geometry. The flap body 24 thus has a greater wall thickness, i.e. a larger thickness, than the sealing edge 26, as can be seen in particular in the sectional views in figures 3 and 5. In addition, the sealing edge 26 has a curved cross-sectional shape. By means of a plurality of curvatures 52, the sealing edge 26 is designed in the form of an expansion bellows. This geometrical configuration further reduces the rigidity of the sealing edge 26 in relation to the rigidity of the flap body 24. Owing to its lower rigidity, the sealing edge 26 is more elastic than the flap body 24 and permits reliable sealing of the air duct 18 in relation to the air flow L. Since both the flap body 24 and the sealing edge 26 are composed of the same material, the production is, however, substantially more straightforward than in the case of a shut-off flap with a flap body and a sealing edge composed of a different material.

The production can take place in particular in an injection-molding process. In order to permit a reliable formation of the sealing edge by means of injection molding, the injection mold can have flow-reinforcing regions, which result in a thickening 36 of the flap body 24, and also flow-inhibiting regions, which result in a formation of thin portions 34 of the flap body 24 (see in particular figure 3).

Figures 1 and 3 illustrate the shut-off flap 22 in its closed position. The sealing edge 26 lies here against a sealing surface 20 of the housing 12. The sealing surface 20 is inclined in relation to a longitudinal direction, which extends along the main flow direction L, of the air duct 18. It can be seen in particular in figure 3 that the inclined sealing surface 20 results in the formation of a step in the housing 12 or the air duct 18. In the closed position, the sealing edge 26 comes to butt here with an end portion 50 against the inclined sealing surface 20, as can be seen in particular in figure 5. The contact between the sealing edge 26 and the sealing surface 20 extends linearly here. Contrary to the illustration in figure 5, the end portion 50 of the sealing edge 26 does not engage in the housing 12 in the region of the sealing surface 20, but rather lies against the sealing surface 20. Owing to the elasticity of the sealing edge 26, which is brought about by its geometry and smaller wall thickness, the sealing edge 26 is deformed elastically here and reliably seals the air duct 18.

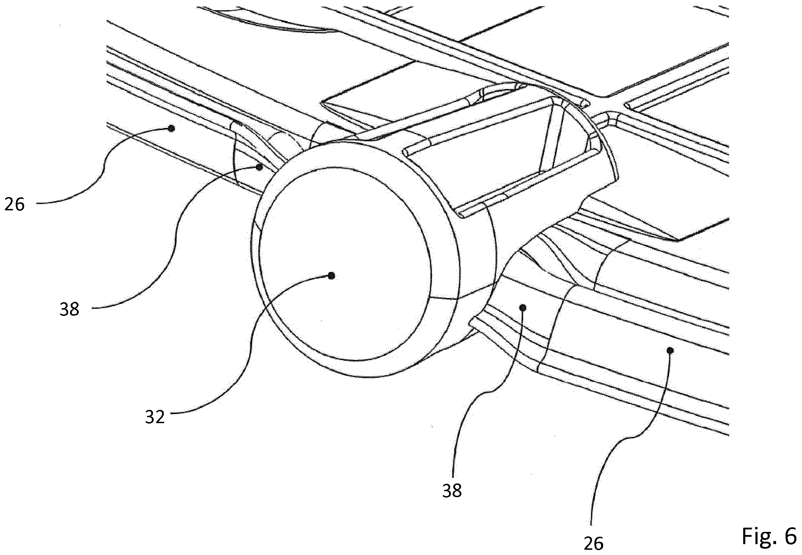

Figure 6 illustrates the transition of the sealing edge 26 to the bearing pin 32. The transition of the sealing edge 26 to the bearing receptacle 30 can run in a corresponding manner. The sealing edge portions 38 of the sealing edge 26 have a curved form here, which permits particularly reliable sealing even in this transition region.

### List of reference signs

- 10: air vent
- 12: housing
- 14: air inlet end
- 16: air outlet end
- 18: air duct
- 19: bearing opening
- 20: sealing surface
- 22: shut-off flap
- 24: flap body
- 26: sealing edge
- 28: stiffening ribs
- 30: bearing receptacle
- 32: bearing pin
- 34: thin portion
- 36: thickening
- 38: sealing edge portion(s)
- 40: operating mechanism
- 42: flap lever
- 44: connecting rod
- 46: operating wheel mounting
- 48: operating wheel
- 50: end portion of sealing edge
- 52: curvatures
- A: axis of rotation
- L: air flow
- LH: extension

## Claims

1. An air vent (10) for a vehicle, comprising:
- a housing (12) with an air duct (18) bounded by the housing (12),
- at least one shut-off flap (22) which is adjustable between a closed position and an open position within the air duct (18) and has a flap body (24) and a sealing edge (26) which at least partially surrounds the flap body (24) for butting against a sealing surface (20) of the housing (12) in the closed position,
wherein the sealing edge (26) is composed of the same material as the flap body (24) and has a lower rigidity than the flap body (24),
**characterized in that**
the sealing edge (26) has a curved cross-sectional shape of an expansion bellows, forming a plurality of consecutive waves, so that the sealing edge (26) runs in a wavy fashion in a direction away from the flap body (24).

2. The air vent (10) as claimed in claim 1,
wherein the at least one shut-off flap (22) is mounted rotatably about an axis of rotation (A).

3. The air vent (10) as claimed in claim 1 or 2,
wherein the sealing edge (26) has a smaller wall thickness than the flap body (24).

4. The air vent (10) as claimed in one of the preceding claims, wherein the flap body (24) has stiffening surface structures, in particular stiffening ribs (28).

5. The air vent (10) as claimed in one of the preceding claims, wherein the at least one shut-off flap (22) is produced in an injection-molding process, in particular in an internal pressure injection-molding process, or in a foaming process.

6. The air vent (10) as claimed in one of the preceding claims, **characterized by** an operating mechanism (40) which is coupled to the at least one shut-off flap (22) for pivoting the shut-off flap (22).

7. The air vent (10) vent as claimed in claims 2 and 5,
wherein the at least one shut-off flap (22) is twisted about its axis of rotation (A), or the sealing surface (20) of the housing (12) is twisted about the axis of rotation (A) of the shut-off flap (22).

8. The air vent (10) as claimed in claim 6,
wherein the distance between the flap body (24) and the sealing surface (20) of the housing (12) in the closed position is reduced with increasing distance from the operating mechanism (40).

9. The air vent (10) as claimed in one of claims 6 to 8, **characterized by** a toggle lever mechanism as operating mechanism, comprising a flap lever (42) arranged on the outer side of the housing (12), wherein the flap lever (42) and the at least one shut-off flap (22) are connected to each other in a manner reaching through the housing (12), a connecting rod (44) which is in engagement with the flap lever (42), and an operating element (48) which is in engagement with the connecting rod (44).

10. The air vent (10) as claimed in claim 9, wherein the operating element (48) latches to the housing (12) in the closed position of the at least one shut-off flap (22).

11. The air vent (10) as claimed in one of the preceding claims, wherein the sealing surface (20) of the housing (12) is inclined at least in sections in relation to a longitudinal direction of the air duct (18).

12. The air vent (10) as claimed in one of the preceding claims, wherein the contact between the sealing edge (26) and the sealing surface (20) of the housing (12) runs substantially linearly in the closed position.

13. The air vent (10) as claimed in one of the preceding claims, wherein the at least one shut-off flap (22) has, at each of two opposite ends, a bearing element (30, 32) interrupting the sealing edge (26) for the rotatable mounting on the housing (12).

14. The air vent (10) as claimed in claim 13,
wherein the sealing edge (26) extends as far as the bearing elements (30, 32), wherein the sealing edge portions (38) lying against the bearing elements (30, 32) have a curved shape and/or have a smaller wall thickness than the remaining sealing edge (26).

## Patentansprüche

1. Luftausströmer (10) für ein Fahrzeug, aufweisend:
- ein Gehäuse (12) mit einem Luftkanal (18), der durch das Gehäuse (12) begrenzt wird,
- zumindest eine Absperrklappe (22), die zwischen einer geschlossenen Stellung und einer offenen Stellung im Luftkanal (18) verstellbar ist und einen
Klappenkörper (24) und eine Dichtkante (26) aufweist, die den Klappenkörper (24) in der geschlossenen Stellung zumindest teilweise umgibt, um an einer Dichtfläche (20) des Gehäuses (12) anzuliegen,
wobei die Dichtkante (26) aus dem gleichen Material wie der Klappenkörper (24) besteht und eine geringere Steifigkeit als der Klappenkörper (24) aufweist,
**dadurch gekennzeichnet, dass**
die Dichtkante (26) eine gekrümmte Querschnittsform eines Faltenbalgs aufweist, der eine Vielzahl von aufeinanderfolgenden Wellen bildet, sodass die Dichtkante (26) wellenförmig in einer Richtung weg von dem Klappenkörper (24) verläuft.

2. Luftausströmer (10) nach Anspruch 1,
wobei die zumindest eine Absperrklappe (22) um eine Drehachse (A) drehbar gelagert ist.

3. Luftausströmer (10) nach Anspruch 1 oder 2,
wobei die Dichtkante (26) eine geringere Wanddicke als der Klappenkörper (24) aufweist.

4. Luftausströmer (10) nach einem der vorhergehenden Ansprüche, wobei der Klappenkörper (24) versteifende Oberflächenstrukturen, insbesondere Versteifungsrippen (28), aufweist.

5. Luftausströmer (10) nach einem der vorhergehenden Ansprüche, wobei die zumindest eine Absperrklappe (22) in einem Spritzgießprozess, insbesondere in einem inneren Druckspritzgießprozess, oder in einem Schäumprozess hergestellt wird.

6. Luftausströmer (10) nach einem der vorhergehenden Ansprüche, **gekennzeichnet durch** einen mit der zumindest einen Absperrklappe (22) gekoppelten Betätigungsmechanismus (40) zum Schwenken der Absperrklappe (22).

7. Luftausströmer (10) nach den Ansprüchen 2 und 5,
wobei die zumindest eine Absperrklappe (22) um ihre Drehachse (A) gedreht wird oder die Dichtfläche (20) des Gehäuses (12) um die Drehachse (A) der Absperrklappe (22) gedreht wird.

8. Luftausströmer (10) nach Anspruch 6,
wobei sich der Abstand zwischen dem Klappenkörper (24) und der Dichtfläche (20) des Gehäuses (12) in der geschlossenen Stellung mit zunehmendem Abstand von dem Betätigungsmechanismus (40) verringert.

9. Luftausströmer (10) nach einem der Ansprüche 6 bis 8,
**gekennzeichnet durch** einen Kniehebelmechanismus als Betätigungsmechanismus, der einen an der Außenseite des Gehäuses (12) angeordneten Klappenhebel (42), wobei der Klappenhebel (42) und die zumindest eine Absperrklappe (22) sich durch das Gehäuse (12) hindurch erstreckend miteinander verbunden sind, eine mit dem Klappenhebel (42) in Eingriff stehende Verbindungsstange (44) und ein mit der Verbindungsstange (44) in Eingriff stehendes Betätigungselement (48) aufweist.

10. Luftausströmer (10) nach Anspruch 9,
wobei das Betätigungselement (48) in der geschlossenen Stellung der zumindest einen Absperrklappe (22) mit dem Gehäuse (12) verriegelt.

11. Luftausströmer (10) nach einem der vorhergehenden Ansprüche, wobei die Dichtfläche (20) des Gehäuses (12) zumindest abschnittsweise in Bezug auf eine Längsrichtung des Luftkanals (18) geneigt ist.

12. Luftausströmer (10) nach einem der vorhergehenden Ansprüche, wobei der Kontakt zwischen der Dichtkante (26) und der Dichtfläche (20) des Gehäuses (12) in der geschlossenen Stellung im Wesentlichen linear verläuft.

13. Luftausströmer (10) nach einem der vorhergehenden Ansprüche, wobei die zumindest eine Absperrklappe (22) an jedem von zwei gegenüberliegenden Enden ein Lagerelement (30, 32) aufweist, das die Dichtkante (26) für die drehbare Befestigung am Gehäuse (12) unterbricht.

14. Luftausströmer (10) nach Anspruch 13,
wobei sich die Dichtkante (26) bis zu den
Lagerelementen (30, 32) erstreckt, wobei die an den Lagerelementen (30, 32) anliegenden Dichtkantenbereiche (38) eine gekrümmte Form und/oder eine geringere Wandstärke als die übrige Dichtkante (26) aufweisen.

## Revendications

1. Bouche d'aération (10) pour un véhicule, comprenant :
- un boîtier (12) avec un conduit d'air (18) limité par le boîtier (12),
- au moins un clapet d'obturation (22) qui est réglable entre une position fermée et une position ouverte à l'intérieur du conduit d'air (18) et a un corps de clapet (24) et un bord d'étanchéité (26) qui entoure au moins partiellement le corps de clapet (24) pour buter contre une surface d'étanchéité (20) du boîtier (12) dans la position fermée,
dans lequel le bord d'étanchéité (26) est composé du même matériau que le corps de clapet (24) et a une rigidité inférieure à celle du corps de clapet (24), **caractérisé en ce que**
le bord d'étanchéité (26) a une forme de section transversale incurvée d'un soufflet d'expansion, formant une pluralité d'ondes consécutives, de sorte que le bord d'étanchéité (26) s'étend d'une manière ondulée dans une direction s'éloignant du corps de clapet (24).

2. Bouche d'aération (10) selon la revendication 1, dans laquelle le au moins un clapet d'obturation (22) est monté de manière rotative autour d'un axe de rotation (A).

3. Bouche d'aération (10) selon la revendication 1 ou 2, dans laquelle le bord d'étanchéité (26) a une épaisseur de paroi inférieure à celle du corps de clapet (24).

4. Bouche d'aération (10) selon l'une quelconque des revendications précédentes, **caractérisée en ce que** le corps de clapet (24) présente des structures de surface de renforcement, en particulier des nervures de renforcement (28) .

5. Bouche d'aération (10) selon l'une quelconque des revendications précédentes, **caractérisée en ce que** le au moins un clapet d'obturation (22) est fabriqué par un procédé de moulage par injection, en particulier par un procédé de moulage par injection sous pression interne, ou par un procédé de moussage.

6. Bouche d'aération (10) selon l'une quelconque des revendications précédentes, **caractérisée par** un mécanisme d'actionnement (40) qui est couplé à l'au moins un clapet d'obturation (22) pour faire pivoter le clapet d'obturation (22) .

7. Bouche d'aération (10) selon les revendications 2 et 5, dans laquelle le au moins un clapet d'obturation (22) est torsadé autour de son axe de rotation (A), ou la surface d'étanchéité (20) du boîtier (12) est torsadée autour de l'axe de rotation (A) du clapet d'obturation (22).

8. Bouche d'aération (10) selon la revendication 6, dans laquelle la distance entre le corps de clapet (24) et la surface d'étanchéité (20) du boîtier (12) dans la position fermée est réduite avec l'augmentation de la distance à partir du mécanisme d'aération (40).

9. Bouche d'aération (10) selon l'une quelconque des revendications 6 à 8, **caractérisée par** un mécanisme à levier basculant comme mécanisme d'actionnement, comprenant un levier à clapet (42) disposé sur le côté extérieur du boîtier (12), le levier à clapet (42) et le au moins un clapet d'obturation (22) étant reliés l'un à l'autre de manière à traverser le boîtier (12), une tige de liaison (44) qui est en prise avec le levier à clapet (42), et un élément d'actionnement (48) qui est en prise avec le tige de liaison (44).

10. Bouche d'aération (10) selon la revendication 9, dans laquelle l'élément d'actionnement (48) s'enclenche sur le boîtier (12) dans la position fermée du au moins un clapet d'obturation (22).

11. Bouche d'aération (10) selon l'une quelconque des revendications précédentes,
dans lequel la surface d'étanchéité (20) du boîtier (12) est inclinée au moins par sections par rapport à une direction longitudinale du conduit d'air (18).

12. Bouche d'aération (10) selon l'une quelconque des revendications précédentes,
dans lequel le contact entre le bord d'étanchéité (26) et la surface d'étanchéité (20) du boîtier (12) s'étend sensiblement linéairement dans la position fermée.

13. Bouche d'aération (10) selon l'une quelconque des revendications précédentes,
dans lequel le au moins un clapet d'obturation (22) a, à chacune de deux extrémités opposées, un élément d'appui (30, 32) interrompant le bord d'étanchéité (26) pour le montage rotatif sur le boîtier (12).

14. Bouche d'aération (10) selon la revendication 13,
dans lequel le bord d'étanchéité (26) s'étend jusqu'aux éléments de d'appui (30, 32), dans lequel les parties de bord d'étanchéité (38) reposant contre les éléments de d'appui (30, 32) ont une forme incurvée et/ou ont une épaisseur de paroi inférieure à celle du bord d'étanchéité (26) restant.
